# EUROPEAN PATENT SPECIFICATION

(11) **EP 2 436 847 B1**
(45) Date of publication and mention of the grant of the patent: **08.11.2017**
(21) Application number: 11183310.9
(22) Date of filing: 29.09.2011
(51) Int. Cl.: E04B 2/74, F16B 12/00, A47B 57/26, F16B 12/46, F16B 12/56, A47C 19/02

(54) **Device for connecting parts**
Vorrichtung zum Verbinden von Teilen
Dispositif pour l'assamblage de pièces

(30) Priority: 01.10.2010 SE 1051023
(43) Date of publication of application: 04.04.2012
(73) Proprietor: Charles L. Strand Enskild Firma, 43650 Hovås (SE)
(72) Inventor: Strand, Charles L., 436 50 Hovås (SE)
(74) Representative: Zacco Sweden AB

(56) References cited:
- FR-A1- 2 914 374
- US-A- 4 103 465
- US-A1- 2003 039 507
- US-A1- 2006 032 994

## Description

The present invention relates to a device in connection with connecting parts for releasable connection of adjoining end portions of furniture ends, scaffolds or other connectable parts, and for supporting objects, and which is formed by an end coupling part provided with opposite receiving apertures, which are angled in relation to one another, whereby vertically extending fastening part, which has receiving accommodation with laterally extending, slot-shaped aperture, is integrated with said connecting part, whereby a supporting part exhibiting a thickened dolly part can be displaceably received in said receiving accommodation, and with intermediate connecting web can be received in said slot-shaped aperture, whereby the fastening part is arranged to be kept on a desired set level.

Previously, connecting adjoining end portions of furniture parts with one another, and at the same time supporting another furniture part or connecting and supporting other suitable objects and parts, has often required several different parts and operations to obtain a safe connection and holding. Examples of furniture may for example be bed frames and similar box forms.

US 2006/0032994 A1 relates to a connection for screen walls with the possibility of supporting plate shaped desk boards (10) on profiled uprights. However, uprights (7) and brackets (9) are designed in a special shape-adapted way, and the uprights are mounted in the inner shape-adapted flanges of the profile and lack support laterally, except the inner holding part of the bracket (9). This does not provide any satisfactory support and guidance of the parts connected to said connecting parts. Nor does the device previously known by GB 2103752A solve this problem in an effective and safe way.

Therefore, the main object of the present invention is first of all to find a solution of this problem, which makes it possible to connect and support furniture parts in a safe way by means thereof.

Said object is reached by means of a device according to the present invention, which is mainly characterized in that the supporting part, which is formed by an integrated part with dolly part and connecting web, exhibits an upright, which supports connecting web and dolly part, that said upright is located at least on the underside of the supporting part, and that locking screws or other fastening means can be received by said upright in order to lock on the outside of the external lateral surface of said fastening part, or in holes therein, and that the supporting part exhibits shape-adapted contact surfaces, which are arranged to bear congruently on the side flanges of the receiving apertures, which side flanges are arranged at the desired angle in relation to one another, on each side of said fastening part and dolly part.

The invention also relates to a further embodiment of a device for releasable connection of furniture parts or other connectable parts with one another, such as for instance legs of furniture with a bed frame for supporting the bed frame etc., whereby one furniture part etc., is constituted by a profiled beam.

Such a device is mainly characterized in that vertically extending fastening part, which has receiving accommodation with laterally extending, slot-shaped aperture, is integrated with said connectable part, that a supporting part exhibiting a thickened dolly part can be displaceably received in said receiving accommodation, and with intermediate connecting web can be received in said slot-shaped aperture, whereby the fastening part is arranged to be kept on a desired set level, for supporting said bed frame, etc.

The invention is described below as a number of preferred embodiments, whereby it is referred to the accompanying drawings, in which:

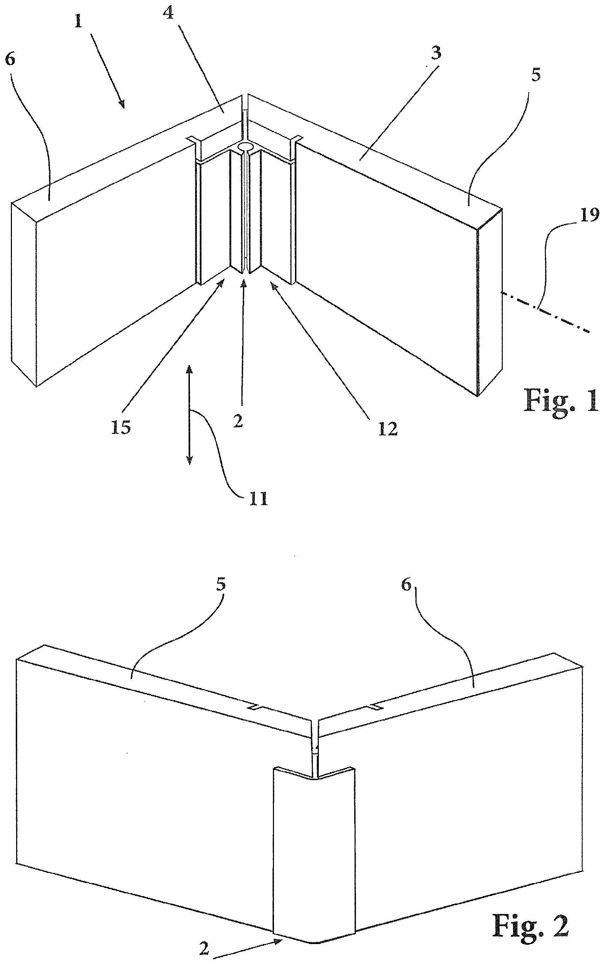

Fig. 1 is a perspective view from one side of the device in connected state with two furniture parts,

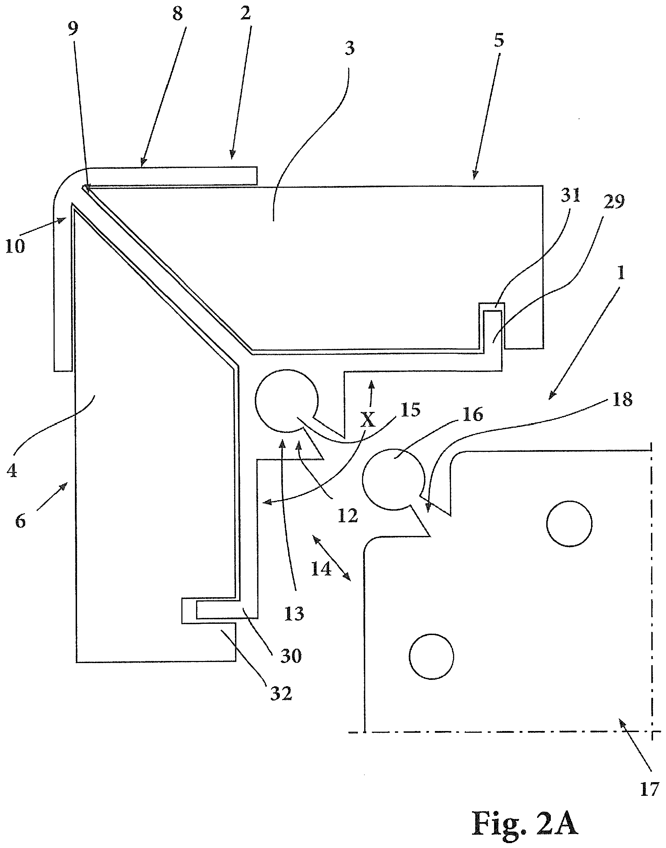

Fig. 2 is a perspective view of the device in connected state with two furniture parts seen from the opposite side in relation to Fig. 1,
Fig. 2A is a view from above of the device in a state, in which it is ready to be connected,

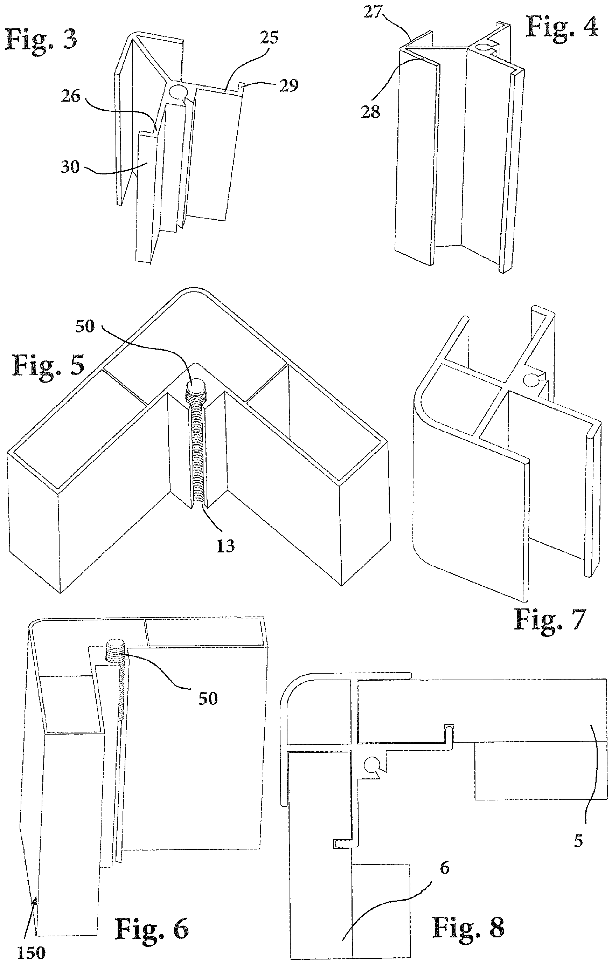

Figs. 3-4 illustrate examples of an end coupling part seen from different directions,
Figs. 5-8 illustrate further examples of end coupling parts,

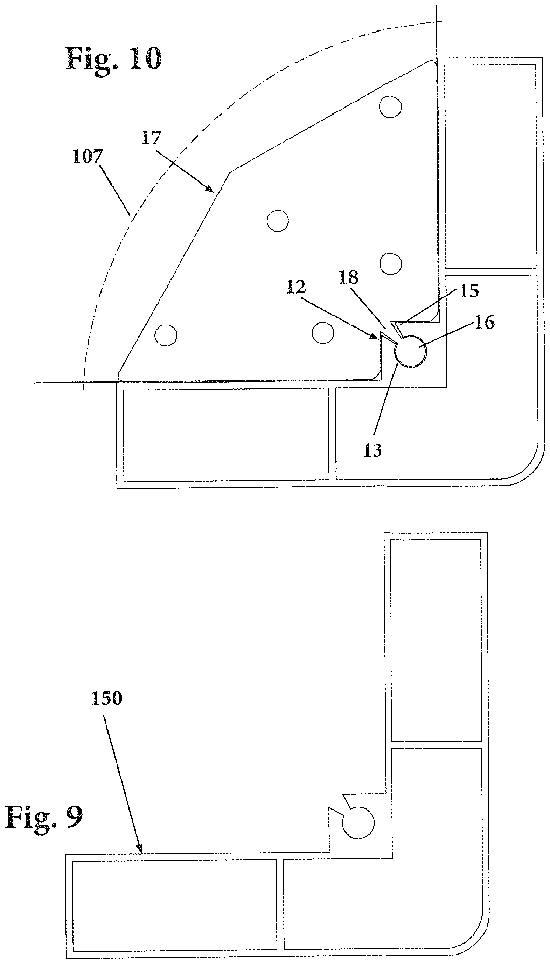

Fig. 9 is a cross sectional view of an end coupling part,
Fig. 10 is a view from above of an end coupling part in connected state with a supporting part,

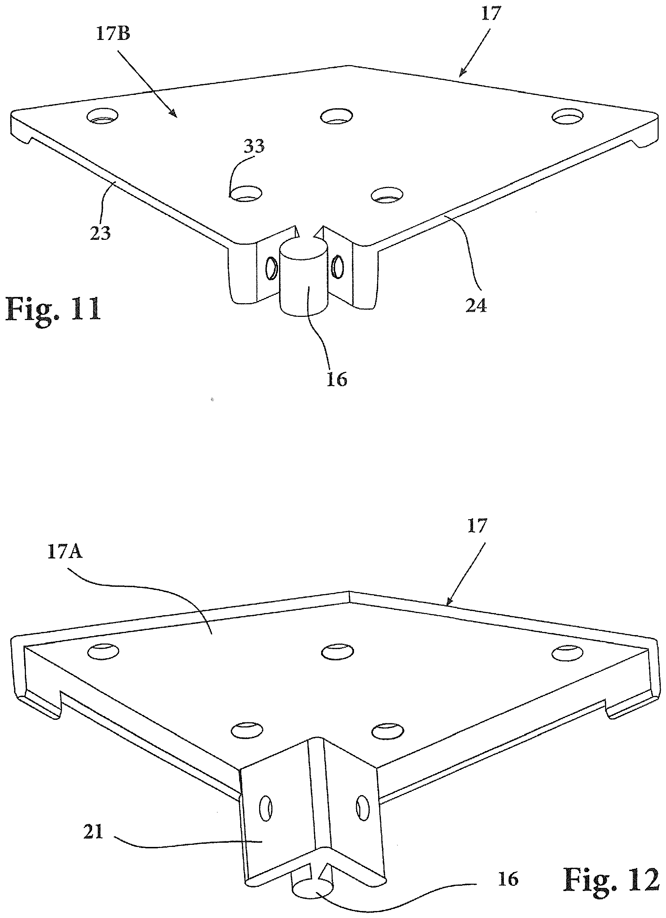

Figs. 11-12 are different views of such an end coupling part, and

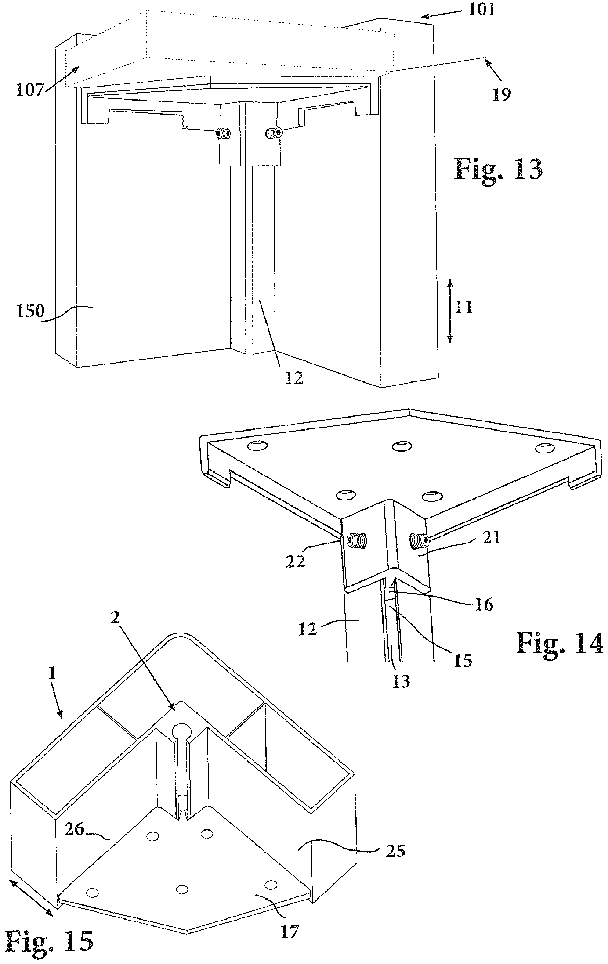

Figs. 13-15 illustrate the device in connected state seen from different directions.

A device 1 according to the present invention in connection with connecting part 2, which is intended to make it possible to obtain simple, safe and effective releasable connection of adjoining end portions 3, 4 of furniture ends 5, 6, scaffolds or other connectable parts, and for supporting objects 7, may for example be suitable for connecting a bed body with a bed frame. Such a device 1 is formed by an end coupling part 8 provided with opposite receiving apertures 9, 10, which are angled X at a desired angle in relation to one another.

According to the invention a vertically 11 extending fastening part 12, which has a receiving accommodation 13 with laterally 14 extending, slot-shaped aperture 15, is integrated with said connecting part 2. A supporting part 17 can with its thickened dolly part 16 be displaceably received in said receiving accommodation 13, and can with intermediate connecting web 18 be received in said slot-shaped aperture 15. Said fastening part 12 is arranged to keep the object 7 on a desired set level 19.

In said receiving accommodation 13 its inner, with holes provided wall may exhibit threads, so that a threaded bar 50 can be screwed into the accommodation 13 and function as an attachment for objects to be fastened therewith.

Such a device 101 according to the indicated further embodiment, and which is arranged to make it possible to obtain simple, safe and effective connection of furniture parts or other connectable parts with one another, such as for example four legs of furniture 150 with a centrally located bed frame 107 for supporting the bed frame etc. 107, whereby one furniture part etc. 150 is constituted by a profiled beam, comprises means effective for this purpose. More precisely, a vertically 11 extending fastening part 12 , which has receiving accommodation 13 with laterally 14 extending, slot-shaped aperture 15, is integrated with said connectable part 150. A supporting part 17 exhibiting a thickened dolly part 16 can be displaceably received in said receiving accommodation 13, and can with intermediate connecting web 18 be received in said slot-shaped aperture 15. Said fastening part 12 is arranged to be kept on a desired set level 19 to support said bed frame 107, etc.

Said end coupling part 8 according to the first embodiment is formed by profiles, which fit to the desired number of furniture parts 5, 6, etc., which are to be connected in said as intersection 25 arranged meeting place, whereby the fastening part 12 is integrated with said profiles and located next to the opposite receiving apertures 9, 10 in the shape of a groove.

According to the illustrated example said receiving apertures 9, 10, which are arranged at least in pairs, are angled 90° in relation to one another, but they may also be angled at another desired angle, larger or smaller than 90°, for example 180°, in order to extend furniture parts, etc. Said end coupling part 8 is formed by profiles with flanges 27, 28; 29, 30 arranged and intended for grasping parts 3, 4 of furniture ends 5, 6, and for insertion and receiving, respectively, in slots 31, 32 in said furniture ends 5, 6. Said supporting part 17, which is formed by an integrated part with dolly part 16 and connecting web 18, exhibits an upright 21, which supports said connecting web 18 and dolly part 16, and which is located at least on the underside 17A of the supporting part 17. By means of locking screws 22 or other fastening means, which can be received by said upright 21 in order to lock on the outside of the external lateral surface of said fastening part 12, or in holes therein, the supporting part 17 can be locked on a desired level by means of simple tightening of said screws. Suitably, the supporting part 17 exhibits shape-adapted contact surfaces 23, 24, which are arranged to bear congruently on the side flanges 25, 26 of the receiving apertures 9, 10, which are angled at a desired angle X. Further, the supporting part 17 may exhibit openings 33 or other suitable means for fastening intended objects 7, 107 for receiving screws therein, and smooth upper surface 17B.

The nature and functioning of a device according the present invention should have been clear from the description and drawings, but, of course, the invention is not limited to the embodiments described above and illustrated in the accompanying drawings. Modifications are possible, especially as far as the nature of the different parts is concerned, or by using equivalent technique, without departing from the scope of the invention as it is defined in the patent claims.

## Claims

1. Device (1) with connecting parts (2) for releasable connection of adjoining end portions (3, 4) of furniture ends (5, 6), scaffolds or other connectable parts, with a supporting part (17) for supporting objects (107), and which is formed by an end coupling part (8) provided with opposite receiving apertures (9, 10), which are angled (X) in relation to one another, whereby vertically (11) extending fastening part (12), which has receiving accommodation (13) with laterally (14) extending, slot-shaped aperture (15), is integrated with said connecting part (2), whereby the supporting part (17) exhibiting a thickened dolly part (16) displaceably received in said receiving accommodation (13), and with intermediate connecting web (18) received in said slot-shaped aperture (15), whereby the fastening part (12) is arranged to be kept on a desired set level (19) by locking screws and that the supporting part (17) is formed by an integrated part with the dolly part (16) and the connecting web (18), **characterized in that** the supporting part (17) exhibits an upright (21), which supports the connecting web (18) and dolly part (16), that said upright (21) is located at least on the underside (17A) of the supporting part (17), and that the locking screws (22) are received by said upright (21) in order to lock on the outside of the external lateral surface of said fastening part (12), or in holes therein, and that the supporting part (17) exhibits shape-adapted contact surfaces (23, 24), which are arranged to bear congruently on the side flanges (25, 26) of the receiving apertures (9, 10), which side flanges are arranged at the desired angle (X) in relation to one another, on each side of said fastening part (12) and dolly part (16), and with the fastening part (12) located next to the opposite receiving apertures (9, 10) in the shape of a groove, and that said receiving apertures (9, 10), are arranged in pairs, angled 90° in relation to one another.

2. Device according to Claim 1, whereby the end coupling part (8) is formed by profiles, **characterized in that** the fastening part (12) is integrated with said profiles.

3. Device according to anyone of the preceding Claims, **characterized in that** the end coupling part (8) is formed by profiles with flanges (27, 28; 29, 30) for grasping parts (3, 4) of furniture ends (5, 6), and for insertion in slots (31, 32) in said furniture ends (5, 6), respectively.

4. Device according to anyone of the Claims 1-3, **characterized in that** the supporting part (17) exhibits openings (33) or other suitable means for fastening intended object (107), and a smooth upper surface (17B).

5. Device (101) according to anyone of the claims 1-4 for releasable connection of legs of furniture (150) with a bed frame (107) for supporting the bed frame, whereby one furniture part (150), is constituted by a profiled beam, **characterized in that** vertically (11) extending fastening part (12), which has receiving accommodation (13) with laterally (14) extending, slot-shaped aperture (15), is integrated with said connectable part (150), that a supporting part (17) exhibiting a thickened dolly part (16) can be displaceably received in said receiving accommodation (13), and with intermediate connecting web (18) can be received in said slot-shaped aperture (15), whereby the fastening part (12) is arranged to be kept on a desired set level (19), for supporting said bed frame (107), etc.

6. Device according to anyone of the Claims 1-5, **characterized in that** said receiving accommodation (13) is provided with internal threads, so that a threaded bar (50) can be screwed into the accommodation (13) and function as an attachment for objects to be fastened therewith.

## Patentansprüche

1. Vorrichtung (1) mit Verbindungsteilen (2) zur lösbaren Verbindung angrenzender Endabschnitte (3, 4) von Möbelenden (5, 6), Gerüsten oder anderen verbindbaren Teilen, mit einem Trägerteil (17) zum Tragen von Objekten (107), das durch ein Endkopplungsteil (8) gebildet ist, das mit gegenüberliegenden Aufnahmedurchbrechungen (9, 10) versehen ist, die in Bezug aufeinander angewinkelt (X) sind, wobei ein sich vertikal (11) erstreckendes Befestigungsteil (12), das eine Aufnahmeunterbringung (13) mit einer sich lateral (14) erstreckenden schlitzförmigen Durchbrechung (15) aufweist, in das Verbindungsteil (2) integriert ist, wobei das Trägerteil (17), das ein verdicktes Gegenhalterteil (16) aufweist, verschiebbar in der Aufnahmeunterbringung (13) aufgenommen ist, und wobei ein Zwischenverbindungssteg (18) in der schlitzförmigen Durchbrechung (15) aufgenommen ist, wobei das Befestigungsteil (12) so angeordnet ist, dass es an einem gewünschten Einstellniveau (19) durch Verriegelungsschrauben gehalten wird, und dass das Trägerteil (17) durch ein integriertes Teil mit dem Gegenhalterteil (16) und dem Verbindungssteg (18) gebildet ist, **dadurch gekennzeichnet, dass** das Trägerteil (17) einen Ständer (21) aufweist, der den Verbindungssteg (18) und das Gegenhalterteil (16) trägt, das der Ständer (21) zumindest an der Unterseite (17A) des Trägerteils (17) angeordnet ist, und dass die Verriegelungsschrauben (22) durch den Ständer (21) zur Verriegelung an der Außenseite der äußeren Seitenfläche des Befestigungstells (12) oder in Löchern darin aufgenommen sind, und dass das Trägerteil (17) formangepasste Kontaktflächen (23, 24) aufweist, die so angeordnet sind, dass sie kongruent an den Seitenflanschen (25, 26) der Aufnahmedurchbrechungen (9, 10) anlegen, wobei die Seitenflansche unter dem gewünschten Winke! (X) in Bezug aufeinander an jeder Seite des Befestigungsteils (12) und des Gegenhalterteils (16) angeordnet sind, und wobei das Befestigungsteil (12) benachbart den gegenüberliegenden Aufnahmedurchbrechungen (9, 10) in der Form einer Nut angeordnet ist, und dass die Aufnahmedurchbrechungen (9, 10) in Paaren angewinkelt unter 90° in Bezug aufeinander angeordnet sind.

2. Vorrichtung nach Anspruch 1, wobei das Endkopplungsteil (8) durch Profile geformt ist, **dadurch gekennzeichnet, dass** das Befestigungsteil (12) in die Profile integriert ist.

3. Vorrichtung nach einem der vorhergehenden Anspruche, **dadurch gekennzeichnet, dass** das Endkopplungsteil (8) durch Profils mit Flanschen (27, 28; 29, 30) zum Greifen von Teilen (3, 4) von Möbelenden (5, 6) bzw. zum Einsetzen in Schlitze (31, 32) in den Möbelenden (5, 6) geformt ist.

4. Vorrichtung nach einem der Ansprüche 1 bis 3, **dadurch gekennzeichnet, dass** das Trägerteil (17) Öffnungen (33) oder ein anderes geeignetes Mittel zum Befestigen eines beabsichtigten Objekts (107) sowie eine glatte obere Fläche (17B) aufweist.

5. Vorrichtung (101) nach einem der Ansprüche 1-4 zur lösbaren Verbindung von Möbelfüßen (150) mit einem Bettrahmen (107) zum Tragen des Bettrahmens, wobei ein Möbelteil (150) durch einen profilierten Träger gebildet ist, **dadurch gekennzeichnet, dass** ein sich vertikal (11) erstreckendes Befestigungsteil (12) gezeigt wird, das eine Aufnahmeunterbringung (13) mit einer sich lateral (14) erstreckenden schlitzförmigen Durchbrechung (15) aufweist, in das verbindbare Teil (150) integriert ist, das ein Trägerteil (17), das ein verdicktes Gegenhalterteil (16) aufweist, verstellbar in der Aufnahmeunterbringung (13) aufgenommen werden kann, und wobei ein Zwischenverbindungssteg (18) in der schlitzförmigen Durchbrechung (15) aufgenommen werden kann, wobei das Befestigungsteil (12) so angeordnet ist, dass es an einem gewünschten Einstellniveau (19) zum Tragen des Bettrahmens (107), etc. gehalten werden kann.

6. Vorrichtung nach einem der Ansprüche 1 - 5, **dadurch gekennzeichnet, dass** die Aufnahmeunterbringung (13) mit einem Innengewinde versehen ist, so dass eine Gewindestange (50) in die Unterbringung (13) geschraubt werden und als eine Befestigung für damit zu befestigende Objekte dienen kann.

## Revendications

1. Dispositif (1) avec des parties ou pièces de connexion (2) pour une connexion libérable de parties d'extrémités contiguës (3, 4) d'extrémités de meubles (5, 6), d'échafaudages ou d'autres parties connectables, avec une partie de support (17) destinée à supporter des objets (107), et qui est constitué par une partie de couplage d'extrémité (8) dotée d'ouvertures de réception opposées (9, 10) qui sont inclinées (X) l'une par rapport à l'autre, grâce à quoi une partie de fixation (12) s'étendant verticalement (11), qui possède un logement de réception (13) avec une ouverture en forme de fente (15) s'étendant latéralement (14), est intégrée avec ladite partie de connexion (2), grâce à quoi la partie de support (17) présentant une partie de diabolo épaissie (16) reçue avec possibilité de déplacement dans ledit logement de réception (13), et avec une nervure de connexion intermédiaire (18) reçue dans ladite ouverture en forme de fente (15), grâce à quoi la partie de fixation (12) est conçue ou réalisée pour être maintenue à un niveau déterminé souhaité (19) par des vis de blocage et en ce que la partie de support (17) est formée par une partie intégrée avec la partie de diabolo (16) et la nervure de connexion (18), **caractérisé en ce que** la partie de support (17) présente un montant (21), qui supporte la nervure de connexion et la partie de diabolo (16), **en ce que** ledit montant (21) est situé au moins sur le côté inférieur (17A) de la partie de support (17), et **en ce que** les vis de blocage (22) sont reçues par ledit montant (21) de manière à se bloquer sur l'extérieur de la surface latérale externe de ladite partie de fixation (12), ou dans des trous dans celui-ci, et **en ce que** la partie de support (17) présente des surfaces de contact à forme adaptée (23, 24), qui sont conçues ou réalisées pour porter de manière congruente sur les bords latéraux (25, 26) des ouvertures de réception (9, 10), lesquels bords sont disposés suivant l'angle souhaité (X) l'un par rapport à l'autre, de chaque côté de ladite partie de fixation (12) et de la partie de diabolo (16), et avec la partie de fixation (12) située à proximité des ouvertures de réception opposées (9, 10) sous la forme d'une rainure, et **en ce que** lesdites ouvertures de réception (9, 10), sont disposées par paires, inclinées de 90° l'une par rapport à l'autre.

2. Dispositif selon la revendication 1, dans lequel la partie de couplage d'extrémité (8) est formée par des profilés, **caractérisé en ce que** la partie de fixation (12) est intégrée avec lesdits profilés.

3. Dispositif selon l'une quelconque des revendications précédentes, **caractérisé en ce que** la partie de couplage d'extrémité (8) est formée par des profilés avec des bords (27, 28 ; 29, 30) pour des parties d'accrochage (3, 4) d'extrémités de meubles (5, 6), et pour une insertion dans des fentes (31, 32) dans lesdites extrémités de meubles (5, 6), respectivement.

4. Dispositif selon l'une quelconque des revendications 1 à 3, **caractérisé en ce que** la partie de support (17) présente des ouvertures (33) ou un autre moyen approprié pour fixer un objet prévu (107), et une surface supérieure lisse (17B).

5. Dispositif (101) selon l'une quelconque des revendications 1 à 4 pour une connexion libérable de pieds d'un meuble (150) avec un cadre de lit (107) pour supporter le cadre de lit, grâce à quoi une partie de meuble (150), est constituée par une poutre profilée, **caractérisé en ce que** la partie de fixation (12) s'étendant verticalement (11), qui possède un logement de réception (13) avec une ouverture en forme de fente (15) s'étendant latéralement (14), est intégrée à ladite partie connectable (150), **en ce qu'**une partie de support (17) présentant une partie de diabolo épaissie peut être reçue avec possibilité de déplacement dans ledit logement de réception (13), et avec une nervure de connexion intermédiaire (18) peut être reçue dans ladite ouverture en forme de fente (15), grâce à quoi la partie de fixation (12) est conçue pour être maintenue à un niveau déterminé souhaité (19) pour supporter ledit cadre de lit (107), etc.

6. Dispositif selon l'une quelconque des revendications 1 à 5, **caractérisé en ce que** ledit logement de réception (13) est doté de filetages internes, de sorte qu'une barre filetée (50) puisse être vissée dans le logement (13) et fonctionne comme une fixation pour des objets devant être fixés avec celui-ci.
